# EUROPÄISCHE PATENTSCHRIFT

(11) **EP 0 574 354 B1**
(45) Veröffentlichungstag und Bekanntmachung des Hinweises auf die Patenterteilung: **30.08.1995**
(21) Anmeldenummer: 93810405.6
(22) Anmeldetag: 04.06.1993
(51) Int. Cl.: G01N 27/30

(54) **Körper für die Bildung mindestens einer Elektrode und/oder eines Sensors**
Body for forming at least one electrode and/or a sensor
Corps pour la formation d'au moins une électrode et/ou d'un capteur

(30) Priorität: 09.06.1992 CH 1830/92
(43) Veröffentlichungstag der Anmeldung: 15.12.1993
(73) Patentinhaber: AVL Medical Instruments AG, 8207 Schaffhausen (CH)
(72) Erfinder: Hatschek, Rudolf A., Dr., CH-1700 Fribourg 5 (CH); Heitz, Erich Willi Franz, Dr. med., CH-8207 Schaffhausen (CH)
(74) Vertreter: Krause, Walter, Dr. Dipl.-Ing.

(56) Entgegenhaltungen:
- US-A- 3 726 777
- PATENT ABSTRACTS OF JAPAN vol. 16, no. 231 (P-1361) 28. Mai 1992 ; & JP-A-40 50 648
- DATABASE WPI Week 8342, Derwent Publications Ltd., London, GB; AN 83791383 ; & JP-A-58 151 396
- PATENT ABSTRACTS OF JAPAN vol. 15, no. 149 (P-1190) 15. April 1991 ; & JP-A-30 21 857
- PATENT ABSTRACTS OF JAPAN vol. 6, no. 156 (P-135) 17. August 1982 ; & JP-A-57 073 661
- PATENT ABSTRACTS OF JAPAN vol. 8, no. 6 (P-247) 12. Januar 1984 ; & JP-A-58 168 951
- PATENT ABSTRACTS OF JAPAN vol. 8, no. 102 (C-222) 12. Mai 1984 ; & JP-A-59 019 595
- PATENT ABSTRACTS OF JAPAN vol. 14, no. 462 (P-1113) 5. Oktober 1990 ; & JP-A-21 83 151

## Beschreibung

Die Erfindung betrifft einen Körper für die Bildung mindestens einer Elektrode und/oder eines Sensors, mit einem Träger und einer auf diesem vorhandenen Metalloxidschicht, die aus mindestens einem Oxid von mindestens einem zur fünften oder sechsten Periode und zu einer der Nebengruppen 5a, 6a, 7a, 8 des Periodensystems der chemischen Elemente gehörenden Metall und/oder von Zirkon besteht.

Der Körper kann zum Beispiel vorgesehen sein, um in Kontakt mit einer elektrisch leitenden Flüssigkeit - d.h. einem Elektrolyten - eine Elektrode zu bilden, die als Protonendonator und/oder Protonenakzeptor wirkt. Der Körper kann beispielsweise zur Messung des p_{H}-Wertes benutzt werden. Wie noch erläutert wird, kann der Körper jedoch stattdessen oder zusätzlich auch eine Elektrode und/oder einen Sensor für andere Zwecke bilden bzw. aufweisen.

Die JP-A 4-050 648 offenbart einen biochemischen Sensor mit einem Saphirplättchen, das einen Siliciumfilm mit einer p-Dotierung trägt. Der Siliciumfilm ist auf seiner dem Saphirplättchen abgewandten Seite mit einem Isolierfilm abgedeckt. Ferner sind Leuchtdioden vorhanden, mit denen ein Bereich des Siliziumfilms durch Beleuchtung aktiviert werden kann. Dieser Sensor besitzt also keine aus einem der weiter vorne genannten Metalloxide bestehende Schicht und hat den Nachteil, dass sein Siliciumfilm zum Messen mit Leuchtdioden beleuchtet werden muss.

Die JP-A 58-151 396 offenbart ein die Struktur eines Gamma-Wismut-Einkristall aufweisendes Oxid von Wismut und von einem der Elemente Silicium, Germanium, Gallium oder Titan zur Erhöhung des elektrischen Widerstands zu erhitzen und dann für die Bildung eines elektro-optischen Sensors zu verwenden. Das Oxid enthält jedoch keines der vorgängig angegebenen, beim erfindungsgemässen Körper vorhandenen Metalloxide.

In der US-A 3 726 777 ist ein Körper mit einer Iridiumoxidschicht beschrieben, der als Elektrode für die Messung des p_{H}-Wertes von Blut und andern Flüssigkeiten dient. Gemäss dieser Publikation wird für die Herstellung der Oxidschicht vorzugsweise ein Iridiumdraht in Kalium- oder Natronlauge eingetaucht und danach in einer Sauerstoffumgebung auf ungefährt 800° C erhitzt.

Die Publikation "Preparation of Iridium Oxide and its Application in Sensor-Actuator Systems", W. Olthuis, J.C. van Kerkhof, P. Bergveld, M. Bos, W.E. van der Linden, Sensors and Actuators B, 4, 1991, Seiten 151 - 156, Elsevier Sequoia, offenbart einen mit einer Iridiumoxidschicht versehenen Körper, der als Elektrode für die Abgabe und Aufnahme von Wasserstoffionen und die coulometrische Titration dient. Gemäss dieser Publikation wird zur Herstellung einer Elektrode zuerst ein Träger mit einem Siliciumplättchen und einem auf diesem angeordneten Iridiumfilm hergestellt. Dieser wird dann in einer Schwefelsäure enthaltenden Flüssigkeit elektrochemisch oxidiert.

In der Publikation von Olthuis et al. ist angegeben, dass das Eintauchen von Elektroden in Elektrolyte während einer Gesamtdauer von 120 Stunden eine Verkleinerung der Protonenaustauschrate von ungefähr 18% verursachte und dass zwei nacheinander durchgeführte Konzentrationsmessungen von Hydroxylionen und Wasserstoffionen bei konstanten Konzentrationen innerhalb von 2% bzw. 1% liegende Abweichungen der Messwerte ergeben. Gemäss eigenen Untersuchungen mit Elektroden, die durch Verfahren der in der zitierten US-A 3 726 777 oder der zitierten Publikation von Olthuis et al. beschriebenen Art hergestellt wurden, haben solche Elektroden in der Tat den Nachteil, dass ihre Protonenaufnahmeraten-sowie Protonenabgaberaten und Messempfindlichkeiten im Verlauf der Zeit stark schwanken. Solche zeitlichen Änderungen von Eigenschaften der bekannten Elektroden können nicht nur bei Messungen des p_{H}-Wertes, sondern auch bei anderen Verwendungen einer Elektrode störend sein, bei denen die Elektrode als Sensor - d.h. als Messelement - und/oder als Steuerelement und/oder als Erregerelement dient.

Gemäss der US-A 3 726 777 haben die aus dieser Publikation bekannten Iridiumoxidschichten eine blauschwarze Farbe. Die Herstellung von Oxidschichten durch Verfahren der in der zitierten Publikation von Olthuis et al. beschriebenen Art führt gemäss eigenen Studien und Untersuchungen ebenfalls zu dunklen, weitgehend opaken Oxidschichten. Körper mit Iridiumoxidschichten der aus den zitierten Publikationen bekannten Arten wären daher auch nicht als Messelement für optische Messmethoden geeignet, bei denen die Oxidschicht lichtdurchlässig sein muss.

Der Erfindung liegt daher die Aufgabe zugrunde, einen Körper mit mindestens einer Metalloxidschicht zu schaffen, der für die Bildung mindestens einer als Mess- und/oder Steuer- und/oder Protonenaustausch- und/oder Erregerelement dienenden Elektrode und/oder eines Sensors geeignet ist und Nachteile der bekannten Körper dieser Art behebt. Dabei wird insbesondere angestrebt, dass für die Verwendung des Körpers als Mess- und/oder Steuer und/oder Erregerelement massgebliche Eigenschaften von diesem stabil bleiben, so dass der Körper gut reproduzierbare und genaue Mess-, Steuer- und/oder Erregungsvorgänge ermöglicht.

Die Strukturen der aus der US-A 3 726 777 und der von W. Olthuis et al. zitierten Publikation bekannten Iridiumoxidschichten sind in diesen Publikationen nicht näher beschrieben. Durch eigene Studien und Untersuchungen wurde jedoch festgestellt, dass die durch die bekannten Verfahren hergestellten Iridiumoxidschichten amorph und polykristallin sind und daher aus einer Vielzahl von sehr kleinen, zum Beispiel Grössen von weniger als 0,01 mm aufweisenden Kriställchen bestehen. Es wurde ferner erkannt, dass die erwähnten Schwankungen der Protonenaustauschraten und Messempfindlichkeiten durch die amorphe und polykristalline Struktur der Oxidschichten verursacht werden, weil sich derartige Strukturen im Verlauf der Zeit stark ändern. In einer amorphen und polykristallinen Oxidschicht können insbesondere zwischen den verschiedenen Kriställchen Spalte vorhanden sein und/oder entstehen sowie ihre Grösse verändern. Wenn eine Spalte aufweisende Oxidschicht im Kontakt mit einer elektrolytischen Flüssigkeit gelangt, kann diese in die Spalte eindringen und dadurch Pfade für den elektrischen Strom bilden, welche die Oxidschicht teilweise oder sogar vollständig durchdringen und elektrisch kurzschliessen. Des weitern können die Grenzflächen zwischen den einzelnen Kriställchen - vor allem wenn noch Spalte vorhanden sind - die Brechung, Reflexion sowie Streuung von Licht und damit die dunkle Farbe und Undurchsichtigkeit der Oxidschicht verursachen.

Die gestellte Aufgabe wird daher gemäss der Erfindung durch einen Körper mit den Merkmalen des Anspruchs 1 gelöst.
Die Erfindung betrifft des weiteren eine Einrichtung gemäss dem Anspruch 12.

Die Erfindung betrifft ferner eine Verwendung des Körpers gemäss dem Anspruch 15.

Vorteilhafte Ausgestaltungen des Körpers und der Einrichtung gehen aus den abhängigen Ansprüchen hervor.

Die bzw. jede Oxidschicht des erfindungsgemässen Körpers besitzt einen freien Oberflächenbereich, d.h. einen Oberflächenbereich, der unmittelbar an einen freien Raum angrenzt und nicht durch ein festes Material abgedeckt ist. Dabei ist mindestens der diesen freien Oberflächenbereich bildende Teil der Oxidschicht und vorzugsweise die ganze Oxidschicht einkristallin und besitzt also ein zusammenhängendes, einkristallines Kristallgitter.

Der freie Oberflächenbereich der Oxidschicht kann zum Beispiel eine polygonale - etwa viereckige - oder kreisförmige Umrissform haben oder ringförmig oder C-förmig sein. Die Grösse des freien Oberflächenbereichs der Oxidschicht kann abhängig vom vorgesehenen Verwendungszweck zum Beispiel mindestens 0,1 mm² bis zum Beispiel etwa 1'000 mm² betragen und für viele Zwecke im Bereich von 0,5 mm² bis 100 mm² liegen. Eine amorphe und polykristalline Oxidschicht der vorbekannten, nicht-erfindungsgemässen Art würde bei solchen Oberflächen-Grössen bereits sehr viele Kriställchen und Spalte enthalten.

Die Oxidschicht kann eine ebene und sogenannte ideale Oberfläche besitzen, die durch eine kristallographische Gitterebene gebildet ist, in der alle Oberflächenatome vollkommen regelmässig auf Plätzen angeordnet sind, deren Verteilung mit der periodischen Anordnung der Atome im Innern eines Kristalls übereinstimmt. Die tatsächliche Oberfläche kann jedoch von dieser idealen Oberfläche abweichen. Zum Beispiel kann die oberste Lage oder eine Gruppe von Lagen der Atome als Ganzes und einheitlich gegen die inneren Atome verschoben sein, wobei die Oberfläche in diesem Fall immer noch genau eben sein kann. Des weitern können die Atome der obersten Lage einzeln periodisch verschoben sein, so dass eine sogenannte Überstruktur entsteht. Ferner kann die Periodizität an der Oberfläche und auch im Innern der Oxidschicht durch unregelmässig verteilte Punktfehler verschiedener Art gestört sein. Zum Beispiel können die Atome bei gewissen Gitterplätzen fehlen und/oder ein wenig verschoben und/oder vertauscht sein. Zudem kann die Oberfläche mindestens eine Stufe bilden.

Es sei angemerkt, dass die vorgängig beschriebenen Abweichungen der Oxidschicht von der idealen Struktur und Oberfläche der Oxidschicht selbstverständlich auch in Kombination auftreten können. Die Oxidschicht soll jedoch noch zusammenhängend, einkristallin sowie im allgemeinen regelmässig sein und nicht aus vielen, durch erkennbare Grenzflächen voneinander abgegrenzten Kriställchen mit unterschiedlich orientierten kristallinen Achsen bestehen.

Gemäss der Erfindung soll die bzw. jede Oxidschicht aus mindestens einem Oxid von mindestens einem zur fünften oder sechsten Periode und zur Nebengruppe 5a oder 6a oder 7a oder 8 des Periodensystems der chemischen Elemente gehörenden Metall und/oder von Zirkon - also aus mindestens einem Übergangsmetalloxid - bestehen. Dabei besteht die Oxidschicht vorzugsweise aus einem Oxid oder aus Oxiden von nur einem einzigen der genannten Metalle.

Falls die Oxidschicht ein Oxid eines Metalls aufweist, das in verschiedenen Oxidationsstufen oxidierbar ist, soll vorzugsweise zumindest der die Oberfläche der Oxidschicht bildende und an einen freien Raum angrenzende Teil der Oxidschicht aus dem Oxid der höchstmöglichen Oxidationsstufe bestehen. Dies schützt die Oxidschicht gegen eine weitere Oxidation und trägt damit zur chemischen Stabilität der Oxidschicht bei.

Bei einer besonders vorteilhaften Ausgestaltung des Körpers besteht die Oxidschicht aus Iridiumoxid. Dabei besteht entsprechend den vorgängigen Angaben vorzugsweise zumindest der den freien Oberflächenbereich der Oxidschicht bildende Teil von dieser aus dem Oxid der höchsten Oxidationsstufe, d.h. aus IrO₂.

Die Oxidschicht kann jedoch auch aus Palladiumoxid bestehen.

Abhängig vom vorgesehenen Verwendungszweck des Körpers kann es auch noch günstig sein, die Oxidschicht aus mindestens einem Oxid von einem oder eventuell mehreren der Metalle Niob, Ruthenium, Tantal, Wolfram, Osmium, Platin, Zirkon zu bilden.

Die gemäss der Erfindung mindestens im freien Oberflächenbereich einkristalline Oxidschicht hat eine stabile Struktur. Ferner besitzt sie im Gegensatz zu einer polykristallinen Oxidschicht keine inneren Grenzflächen. Dadurch lässt sich erreichen, dass die Oxidschicht kompakt und vollständig frei von Spalten sowie Mikrospalten ist und bei sachgemässer Verwendung auch frei von Spalten bleibt. Wenn die Oxidschicht bei ihrer Verwendung in Kontakt mit einer Flüssigkeit gelangt, kann diese daher nicht in die Oxidschicht eindringen. Da die einkristalline Oxidschicht keine innern Grenzflächen besitzt und frei von Spalten ist, kann eine allfällige optische Messung selbstverständlich auch nicht durch Spalten gestört werden. All diese Eigenschaften tragen dazu bei, dass der eine einkristalline Oxidschicht aufweisende Körper bei den noch näher beschriebenen Verwendungen sowohl kurzfristig als auch langfristig ein stabiles und gut reproduzierbares Verhalten zeigt.

Bei einer vorteilhaften Ausgestaltung des erfindungsgemässen Körpers besitzt dessen Träger einen Trägerteil aus elektrisch isolierendem Material, das mindestens bis zu einer Temperatur von 600°C und vorzugsweise mindestens bis zu einer Temperatur von 800°C hitzebeständig und fest ist. Der Trägerteil kann zum Beispiel durch ein Plättchen gebildet sein, das aus einem kristallinen Material, wie Aluminiumoxid, nämlich einem Stück eines künstlichen, durchsichtigen, farblosen Saphirs besteht. Der Körper kann zudem eine auf einem Oberflächenbereich des isolierenden Plättchens angeordnete, metallische Auflage besitzen, auf die die Oxidschicht aufgebracht ist und die zum Beispiel aus dem Metall oder möglicherweise den Metallen besteht, dessen Oxid die Oxidschicht bildet bzw. deren Oxide die Oxidschicht bilden. Die Oxidschicht kann dann zwischen einem der Auflage abgewandten, schichtförmigen, aus einem Oxid der höchsten Oxidationsstufe bestehenden Abschnitt und der Auflage noch einen an diese angrenzenden Übergangsabschnitt haben, der aus einem Oxid niedriger Oxidationsstufe besteht. Hier sei angemerkt, dass das Kristallgitter im Bereich eines solchen Übergangsabschnittes ebenfalls von der idealen Struktur eines Einkristalls abweichen kann.

Falls die Oxidschicht aus Iridiumoxid besteht, kann die vorzugsweise vorhandene Auflage aus Iridium bestehen. In diesem Fall kann die Oxidschicht zwischen einem bei ihrer Oberfläche vorhandenen, aus IrO₂ bestehenden Bereich und der aus Iridium bestehenden Auflage eventuell noch einen Bereich aufweisen, der aus Ir₂O₃ besteht.

Bei einer vorteilhaften Ausgestaltung des erfindungsgemässen Körpers ist eine Abdeckung vorhanden, welche den freien, beispielsweise zum elektrischen Messen und/oder Steuern und/oder Erregen dienenden Oberflächenbereich der Oxidschicht in einer Draufsicht auf diese vollständig umschliesst und den Randbereich der Oxidschicht entlang dem ganzen Rand von dieser abdeckt. Falls der Körper einen elektrisch isolierenden Trägerteil und zwischen diesem und der Oxidschicht eine metallische Auflage besitzt, deckt die Abdeckung vorzugsweise auch den ganzen Rand der Auflage ab. Die Abdeckung soll aus einem von der Oxidschicht verschiedenen Material bestehen und kann - abhängig von der vorgesehenen Verwendung des Körpers - zum Beispiel flüssigkeitsdicht und/oder lichtundurchlässig und/oder elektrisch isolierend sein. Die Abdeckung kann zum Beispiel aus reinem, undotiertem Silicium oder aus Siliciumdioxid bestehen. Wie schon erläutert, kann die innere Struktur und die Oberfläche der Oxidschicht stellenweise von der idealen Struktur und von der idealen Oberfläche eines Einkristalls abweichen. Da solche Abweichungen von der idealen innern Struktur und der idealen Oberfläche insbesondere häufig am Rand der Oxidschicht auftreten, ergibt eine Abdeckung der genannten Art den Vorteil, dass die allenfalls im Randbereich der Oxidschicht vorhandenen Abweichungen von der idealen Struktur und Oberfläche bei der Verwendung des Körpers unwirksam sind. Zudem kann die Abdeckung den Rand einer allfälligen metallischen Auflage elektrisch gegen den an die Oxidschicht angrenzenden Raum isolieren.

Die Oxidschicht kann derart ausgebildet, bemessen und auf einem Träger angeordnet sein, dass sie mehr oder weniger gut elektrisch leitend oder halbleitend ist. Der mit der Oxidschicht versehene Körper kann dann - wie schon erwähnt - mindestens eine Elektrode bilden. Die Oxidschicht kann bei der Verwendung des Körpers als Elektrode zum Beispiel in Kontakt mit einer elektrisch leitenden Flüssigkeit - d.h. einem Elektrolyten - gebracht werden. Wenn ein elektrischer Strom durch die Oxidschicht und den Elektrolyten geleitet wird, kann die Oxidschicht als Protonendonator und/oder Protonenakzeptor dienen. Eine aus Iridiumoxid bestehende Oxidschicht ist für diesen Zweck besonders vorteilhaft, weil sie zum Protonenaustausch nur ein kleines elektrisches Elektrodenpotential - d.h. nur ein kleines zwischen der Elektrode und der Flüssigkeit vorhandenes Potential - erfordert. Dieses liegt beispielsweise unter dem Potential, bei welchem allenfalls in der Flüssigkeit vorhandene Chlorionen oxidiert und als Chlor freigesetzt werden. Ferner ist bei einer Elektrode mit einer Schicht aus Iridiumoxid das zum Protonenaustausch erforderliche Elektrodenpotential auch kleiner als das eine elektrolytische Zerlegung von Wasser bewirkende Potential. Auch eine aus Palladiumoxid bestehende Oxidschicht ist noch gut für die Bildung einer zum Protonenaustausch dienenden Elektrode geeignet.

Ein erfindungsgemässer, eine Elektrode, nämlich eine Messelektrode bildender Körper kann zusammen mit einer andern Elektrode - d.h. einer Referenzelektrode - und zusammen mit elektrischen und/oder elektronischen Schaltungsmitteln verwendet werden, um elektroanalytisch, nämlich zum Beispiel potentiometrisch und/oder coulometrisch und/ oder polarographisch den p_{H}-Wert und/oder die Konzentration bzw. Aktivität irgend eines Ions und/oder die Pufferkapazität von einer aus einem Elektrolyten bestehenden Flüssigkeit zu messen. Die Referenzelektrode kann zum Beispiel mindestens zum Teil aus Kalomel oder Silberchlorid bestehen. Eventuell kann man sogar vorsehen, dass die Referenzelektrode ebenfalls aus einem erfindungsgemässen Körper besteht und eine zum Messen in Kontakt mit der Flüssigkeit bringbare Oxidschicht besitzt. Die Messungen können zum Beispiel in Blut oder in der Lymphe oder im Liquor - d.h. in der Gehirn-Rückenmark-Flüssigkeit - innerhalb oder ausserhalb eines menschlichen oder tierischen Körpers durchgeführt werden. Des weitern kann man auch Messungen in Blutplasma oder in Urin oder in Lösungen irgendwelcher Art, zum Beispiel in einer Lactose- und/oder Glucoselösung und/oder in einer eine Zellkultur enthaltenden Nährlösung durchführen.

Ein erfindungsgemässer Körper kann ferner als Steuerelement, nämlich als Arbeits- und/oder Protonenaustausch- und/oder Titrations- und/oder Steuerelektrode verwendet werden, um in Zusammenwirkung mit einer andern Elektrode, d.h. einer Gegenelektrode, und mit elektrischen und/oder elektronischen Steuermitteln den p_{H}-Wert einer elektrolytischen Flüssigkeit durch Austausch, d.h. Abgabe und/oder Aufnahme von Protonen zu steuern, d.h. zu beeinflussen und zu verändern. Man kann dann zum Beispiel eine solche zur Steuerung des p_{H}-Wertes dienende Steuerelektrode zusammen mit einer Gegenelektrode und mit einem Paar zur Messung des p_{H}-Wertes dienenden Elektroden verwenden, um den p_{H}-Wert gleichzeitig oder abwechselnd zu messen und zu steuern. Dabei kann die Oxidschicht der zum Steuern des p_{H}-Wertes dienenden Steuerelektrode zum Beispiel eine grössere Oberfläche und/oder Dicke haben als die Oxidschicht der zum Messen des p_{H}-Wertes dienenden Elektrode. Es besteht auch die Möglichkeit zum Messen und Steuern des p_{H}-Wertes drei oder nur zwei Elektroden vorzusehen. Ferner kann man dann die verschiedenen Elektroden mit elektronischen Mess- und Regelmitteln verbinden, um den p_{H}-Wert auf einen fest vorgegebenen oder einstellbaren Sollwert zu regeln. Wenn die Elektroden in Kontakt mit einer Flüssigkeit stehen, in welcher durch eine chemische Reaktion einer Substanz und/oder durch Stoffwechselvorgänge von Mikroorganismen oder sonstiger Zellen der p_{H}-Wert verändert wird, kann zudem noch die während der Reaktion bzw. während der Stoffwechselvorgänge zur Konstanthaltung des p_{H}-Wertes verbrauchte elektrische Ladungsmenge gemessen werden. Diese gibt dann ein Mass für die bei der chemischen Reaktion umgewandelte Menge der genannten Substanz bzw. für die Stoffwechselvorgänge der Mikroorganismen oder sonstiger Zellen.

Ein erfindungsgemässer Körper mit einer Oxidschicht aus Iridiumoxid und/oder Palladiumoxid und/oder einem der andern genannten Oxide kann auch verwendet werden, um biologisch aktive Protein- und/oder Peptidmoleküle am freien Oberflächenbereich zu halten, nämlich zu adsorbieren und/oder durch eine chemische Bindung zu immobilisieren. Die genannten Moleküle können dabei zum Beispiel unmittelbar an der Oxidschicht angelagert und/oder durch ein Bindemittel mit der Oxidschicht physikalisch und/oder chemisch verbunden werden. Die biologisch aktiven Moleküle können dann eine vorzugsweise flüssigkeitsdurchlässige Molekülschicht bilden und zum Beispiel in Kontakt mit einer Flüssigkeit gebracht werden, in der eine Substanz gelöst und/oder dispergiert ist, welche durch die biologisch aktiven Moleküle derart chemisch verändert werden kann, dass Ionen - insbesondere Protonen bzw. Hydroxoniumionen oder Hydroxylionen - entstehen. Der erfindungsgemässe Körper kann dann ferner als Elektrode dienen, um die Ionenmenge durch eine elektrisch gesteuerte Aufnahme und/oder Abgabe von Protonen zu beeinflussen und/oder elektroanalytisch zu messen.

Bei einer besonders vorteilhaften Ausgestaltung des erfindungsgemässen Körpers besitzt dessen Träger einen elektrisch isolierenden Trägerteil, etwa ein einstückiges, ebenes Plättchen, auf dem zwei oder mehr Elektroden angeordnet sind. Mindestens eine dieser Elektroden soll dann eine einkristalline Oxidschicht mit mindestens einem Oxid von einem oder eventuell mehreren der genannten Metalle aufweisen und kann dann beispielsweise als p_{H}-Messelektrode oder als Steuer- und/oder Titrationselektrode zum Steuern des p_{H}-Wertes und/oder zur Titration dienen. Ferner kann beispielsweise mindestens eine der auf dem Plättchen oder sonstigen Trägerteil vorhandenen Elektroden aus einem andern Material bestehen und als Referenzelektrode für die p_{H}-Messung und/oder als Gegenelektrode für die Steuerung des p_{H}-Wertes und/oder die elektroanalytische Titration und/oder coulometrische Messungen dienen. Man kann beispielsweise eine ebene Fläche des isolierenden Plättchens mit einer p_{H}-Messelektrode, einer dieser zugeordneten Referenzelektrode, einer Steuer- und/oder Protonenaustausch- und/oder Titrationselektrode und einer dieser zugeordneten Gegenelektrode versehen. Der aus einem Plättchen bestehende Trägerteil kann zudem zusammen mit mindestens einem anderen Teil einen freien, d.h. leeren und kein festes Material enthaltenden, aber vorzugsweise allseitig dicht gegen die Umgebung abgeschlossenen Raum zum Aufnehmen einer zu analysierenden Flüssigkeit - insbesondere einer eine Kultur von Mikroorganismen oder sonstigen Zellen enthaltenden Nährflüssigkeit - begrenzen. Die Elektroden sollen dabei an diesen Raum angrenzen, so dass sie in Kontakt mit der Flüssigkeit gebracht werden können. Die Elektroden können nahe beieinander angeordnet sowie relativ klein bemessen werden und beispielsweise innerhalb eines Hüllkreises oder Hüllquadrats liegen, dessen Durchmesser bzw. Seitenlänge höchstens 10 mm oder sogar nur höchstens 5 mm beträgt. Dies ermöglicht sehr kleine Flüssigkeitsmengen und/oder Zellkulturen sehr schnell zu untersuchen. Man kann dabei zum Beispiel coulometrisch bei konstant gehaltenem p_{H}-Wert die Menge der von Mikroorganismen oder sonstigen Zellen bei Stoffwechselvorgängen an die Nährflüssigkeit abgegebenen Säure oder Säuren messen. Diese Säuremenge kann dann beispielsweise ein Mass für Vitalität der Zellen und deren Beeinflussung durch Arzneimittel oder Umweltgifte geben.

Die Oxidschicht kann durch eine dünne Bemessung lichtdurchlässig und sogar durchsichtig sowie mehr oder weniger klar und farblos gemacht werden. Der Träger oder mindestens ein die Oxidschicht tragender Bereich von diesem kann dann ebenfalls lichtdurchlässig und zum Beispiel sogar durchsichtig ausgebildet werden. Dies ermöglicht, mit Hilfe von die Oxidschicht durchdringendem Licht eine optische Messung an biologisch aktiven, an der Oxidschicht haftenden Molekülen und/oder an lebenden Zellen im an die Oxidschicht angrenzenden Raum und/oder eine mikroskopische Untersuchung durchzuführen.

Die Oxidschicht eines erfindungsgemässen, eine Elektrode oder einen Teil einer solchen bildenden Körpers kann ferner unmittelbar und/oder über eine elektrisch leitende Flüssigkeit leitend mit einem Nervenstrang eines Patienten oder Tieres verbunden werden. Diese Elektrode kann dann in Zusammenwirkung mit einer anderen Elektrode, die zum Beispiel ebenfalls einen erfindungsgemässen Körper aufweist, und in Zusammenwirkung mit elektronischen Mess- und/oder Steuermitteln verwendet werden, um eine Messgrösse - zum Beispiel die elektrische Spannung und/oder den elektrischen Strom und/oder den zeitlichen Verlauf - von Nervensignalen zu messen und/oder um solche Signale zu erzeugen. Die Verwendung einer Elektrode mit einer Oxidschicht hat dabei den Vorteil, dass sich höchstens eine geringe galvanische Polarisation ergibt und dementsprechend nur ein geringes oder praktisch überhaupt kein Kontaktpotential zwischen der Elektrode und dem Nervenstrang entsteht. Das Messen und/oder Erregen von Nervensignalen kann zum Beispiel für diagnostische und/oder therapeutische Zwecke nützlich sein.

Die einkristalline Oxidschicht kann zum Beispiel im Hochvakuum durch ein dünnschichttechnologisches Verfahren hergestellt und gleichzeitig auf den Träger aufgebracht werden. Die Oxidschicht wird dabei vorzugsweise auf eine von einer metallischen Auflage des Trägers gebildete Oberfläche aufgebracht. Für die Herstellung einer Iridiumoxidschicht kann man zum Beispiel auf einen elektrisch isolierenden, etwa aus einem Saphirplättchen bestehenden Trägerteil in einem ersten Aufdampfvorgang durch Aufdampfen von Iridium eine aus reinem Iridium bestehende, metallische Auflage bilden. In einem unmittelbar anschliessenden, zweiten Aufdampfvorgang kann man auf diese metallische Auflage weiter Iridium Aufdampfen und gleichzeitig Sauerstoff in den den Trägerteil enthaltenden Raum einleiten. Der Trägerteil kann mindestens während des zweiten Aufdampfvorgangs auf eine ungefähr 600°C bis 800°C betragende Temperatur erhitzt werden. Beim zweiten Aufdampfvorgang bildet sich auf der metallischen Auflage dann eine einkristalline Iridiumoxidschicht. In analoger Weise kann man auch eine einkristalline Metalloxidschicht von einem der andern genannten Metalle bilden.

Wenn ein elektrisch isolierender Trägerteil zusätzlich zu mindestens einer eine Metalloxidschicht aufweisenden Elektrode beispielsweise noch eine Referenzelektrode aus Silberchlorid und/ oder eine Gegenelektrode aus Platin trägt, kann man noch Silber bzw. Platin auf den Trägerteil aufdampfen und das Silber nachträglich mit einer chlorhaltigen Flüssigkeit in Silberchlorid umwandeln. Desgleichen kann man noch elektrisch leitend mit den verschiedenen Elektroden verbundene Leiterbahnen auf den Trägerteil aufdampfen. Dies ermöglicht eine kostengünstige Herstellung eines mehrere Elektroden bildenden und/oder aufweisenden Körpers.

Es besteht jedoch auch die Möglichkeit, eine Metalloxidschicht auf eine nicht durch Aufdampfen, sondern in irgend einer anderen Weise hergestellte, metallische Auflage eines Trägers aufzubringen. Ferner kann die Oxidschicht eventuell auch durch Züchten eines Oxid-Einkristalls und anschliessendes Zerschneiden und/oder Schleifen hergestellt werden. Die dabei gebildete Scheibe kann dann auf dem Träger befestigt werden.

Bei einer vorteilhaften Ausgestaltung des erfindungsgemässen Körpers beträgt die Dicke der Oxidschicht mindestens 50 nm und höchstens 1 mm. Wenn die Oxidschicht dünnschichttechnologisch hergestellt wird, kann ihre Dicke zum Beispiel bis 1000 nm betragen. Bei einem für die Messung des p_{H}-Werts oder der Pufferkapazität bestimmte Körper ist es günstig, die Oxidschicht nur etwa 100 nm bis 300 nm dick auszubilden. Eine solche, relativ geringe Dicke trägt zur Ermöglichung schneller Messungen bei. Falls der Körper zur Veränderung des p_{H}-Wertes dient, ist es vorteilhaft, die Oxidschicht dicker auszubilden, damit sie genügende Mengen von Protonen abgeben und/oder aufnehmen kann. Die Oxidschicht kann dann zum Beispiel eine Dicke von mindestens 300 nm bis vielleicht etwa 600 nm oder mehr haben. Für optische Messungen ist es vorteilhaft, die Oxidschicht höchstens etwa 300 nm dick zu machen, so dass sie möglichst wenig Licht absorbiert.

Der Erfindungsgegenstand wird nun noch anhand in der Zeichnung beschriebener Ausführungsbeispiele erläutert. In der Zeichnung zeigt
die Fig. 1 einen Schnitt durch einen als Elektrode dienenden Körper mit einer Oxidschicht,
die Fig. 2 eine Draufsicht auf den Körper,
die Fig. 3 eine Messeinrichtung mit zwei Elektroden,
die Fig. 4 ein Diagramm mit einer Darstellung der Abhängigkeit des elektrischen Potentials vom p_{H}-Wert,
die Fig. 5 ein Diagramm zur Veranschaulichung einer coulometrischen Messung und/oder elektroanalytischen Titration,
die Fig. 6 einen Schnitt durch einen Körper für eine elektroanalytische und optische Messung,
die Fig. 7 einen Schnitt durch einen Sensor mit einem mit einer Gruppe von Elektroden versehenen Träger und einem zur Aufnahme einer Flüssigkeit dienenden Raum,
die Fig. 8 eine Draufsicht auf die mit Elektroden versehene Fläche des Trägers des in der Fig. 7 gezeichneten Sensors und ein Blockschema einer elektronischen Messvorrichtung,
die Fig. 9 eine Darstellung des in der Fig. 7 mit IX bezeichneten Ausschnitts in grösserem Massstab und mit zusätzlichen Teilen des in der Fig. 7 gezeichneten Sensors und
die Fig. 10 eine Draufsicht auf eine Vorrichtung mit einem mehrere Gruppen von Elektroden tragenden Träger.

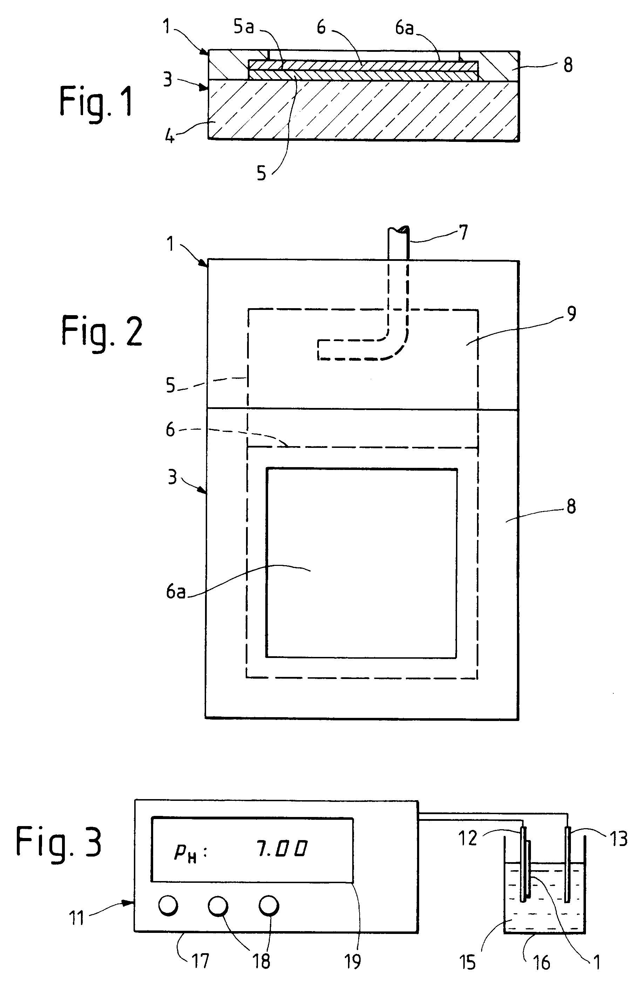

Zu den Figuren 1 bis 3, 6 und 7 bis 9 ist noch anzumerken, dass diese schematisiert und nicht masstäblich gezeichnet sind.

Der in den Figuren 1 und 2 ersichtliche Körper 1 besitzt einen Träger 3. Dieser weist ein Plättchen 4 auf, das einen elektrisch isolierenden Trägerteil bildet und aus einem scheibenförmigen Kristallstück aus Aluminiumoxid, nämlich aus einem durchsichtigen und vorzugsweise mindestens annähernd farblosen, synthetischen Saphirstück besteht. Auf der einen, ebenen Fläche des Plättchens 4 ist eine ebenfalls zum Träger 3 gehörende, metallische, aus einer Schicht Iridium bestehende Auflage 5 angeordnet. Deren Umrissabmessungen sind in der in der Fig. 2 gezeichneten Draufsicht beispielsweise etwas kleiner als diejenigen des Plättchens 4, so dass dieses einen die Auflage 5 in der genannten Draufsicht allseitig umschliessenden Randbereich besitzt. Die Auflage 5 hat zum Beispiel eine leicht längliche, etwa rechteckige Umrissform und ist auf ihrer dem Plättchen 4 abgewandten Oberfläche 5a mit einer einkristallinen, aus Iridiumoxid bestehenden, fest sowie dauerhaft mit ihr verbundenen Oxidschicht 6 versehen. Derjenige Teil der Oxidschicht 6, welcher die der Auflage 5 abgewandte Oberfläche bildet, besteht - wie schon in der Einleitung erwähnt - aus IrO₂. Der an die Auflage 5 angrenzende Teil der Oxidschicht 6 kann hingegen - wie ebenfalls schon in der Einleitung erwähnt - eventuell weniger hoch oxidiert sein und aus Ir₂O₃ bestehen. Die Oxidschicht 6 ist in der Fig. 2 mit einer viereckigen Umrissform gezeichnet, könnte aber auch kreisförmig sein oder irgend eine andere Form haben. Der viereckige Rand der Oxidschicht 6 ist zum Teil bündig mit demjenigen der Auflage 5. Die Oxidschicht 6 bedeckt jedoch nur einen Teil der Auflage 5. Am nicht von der Oxidschicht 6 bedeckten Teil der Auflage 5 ist ein elektrischer Leiter 7 befestigt, etwa angelötet. Eine elektrisch isolierende, beispielsweise aus aufgedampftem, reinem, undotiertem Silicium bestehende Abdeckung 8 umschliesst die Oxidschicht 6 in der in der Fig. 2 gezeichneten Draufsicht und deckt einen Randbereich der Oxidschicht entlang dem ganzen Rand von dieser flüssigkeitsdicht gegen den an den Körper 1 angrenzenden Raum ab. Die Abdeckung 8 deckt zudem mindestens auch den mit dem Rand der Oxidschicht bündigen Teil des Randes der Auflage 5 flüssigkeitsdicht gegen den an den Körper 1 angrenzenden Raum ab. Die Abdeckung 8 begrenzt ein Fenster, in welchem die Oxidschicht 6 einen freien Oberflächenbereich 6a besitzt, der unmittelbar an den den Körper 1 umgebenden Raum angrenzt. Der nicht von der Oxidschicht 6 bedeckte, mit dem Leiter 7 verbundene Abschnitt der Auflage 6 ist - soweit er nicht durch die Abdeckung 8 abgedeckt ist - mit einer zum Beispiel aus einem Klebstoff und/oder einem Kunstharz bestehenden, elektrischen Isolation 9 abgedeckt.

Die in der Fig. 3 ersichtliche, als Ganzes mit 11 bezeichnete Messeinrichtung besitzt zwei Messelemente, nämlich Elektroden 12, 13. Die beiden Elektroden 12, 13 ragen in eine elektrolytische, d.h. mindestens einen gelösten Elektrolyten enthaltende Flüssigkeit 15 hinein. Diese besteht zum Beispiel aus in einem Behälter 16 irgendwelcher Art vorhandenem Blut oder Blutplasma. Die als Mess- und/oder Arbeitselektrode dienende Elektrode 12 besteht mindestens zum Teil aus dem Körper 1 und besitzt zum Beispiel noch eine diesen haltende Halterung. Die Elektrode 12 ist dabei derart angeordnet, dass die Oxidschicht 6 in Kontakt mit der Flüssigkeit 15 steht. Die Elektrode 13 dient als Referenzelektrode und besitzt einen beispielsweise aus Kalomel oder Silberchlorid bestehenden, mit der Flüssigkeit 15 in Kontakt stehenden Abschnitt.

Die beiden Elektroden 12, 13 sind durch elektrische Leiter mit einer elektronischen Messvorrichtung 17 verbunden. Diese besteht aus einem Messgerät mit einem Gehäuse, in dem eine elektrische Spannungsquelle und elektrische sowie elektronische Schaltungsmittel angeordnet sind. Das Messgerät weist ferner mindestens ein manuell betätigbares Bedienungselement 18, beispielsweise mehrere solche, eine Anzeigevorrichtung 19 und eventuell noch eine Registriervorrichtung auf. Die Messeinrichtung 11 ist ausgebildet um den p_{H}-Wert der Flüssigkeit 15 und beispielsweise auch noch deren Pufferkapazität zu messen, wobei zum Beispiel mit einem der Bedienungselemente 18 wahlweise eine zum Messen des p_{H}-Wertes oder der Pufferkapazität dienende Betriebsart eingestellt werden kann.

Wenn ein elektrischer Strom durch die beiden Elektroden 12, 13 und insbesondere durch die Oxidschicht 6 des zur Elektrode 12 gehörenden Körpers 1 sowie durch die Flüssigkeit 15 hindurch geleitet wird, kann das Iridiumoxid abhängig von der Stromrichtung durch Redoxreaktionen Protonen aufnehmen oder abgeben. Diese Vorgänge können vereinfacht beschrieben werden durch die Formel

IrO₂ + H⁺ + e⁻ ⇄ IrOOH.

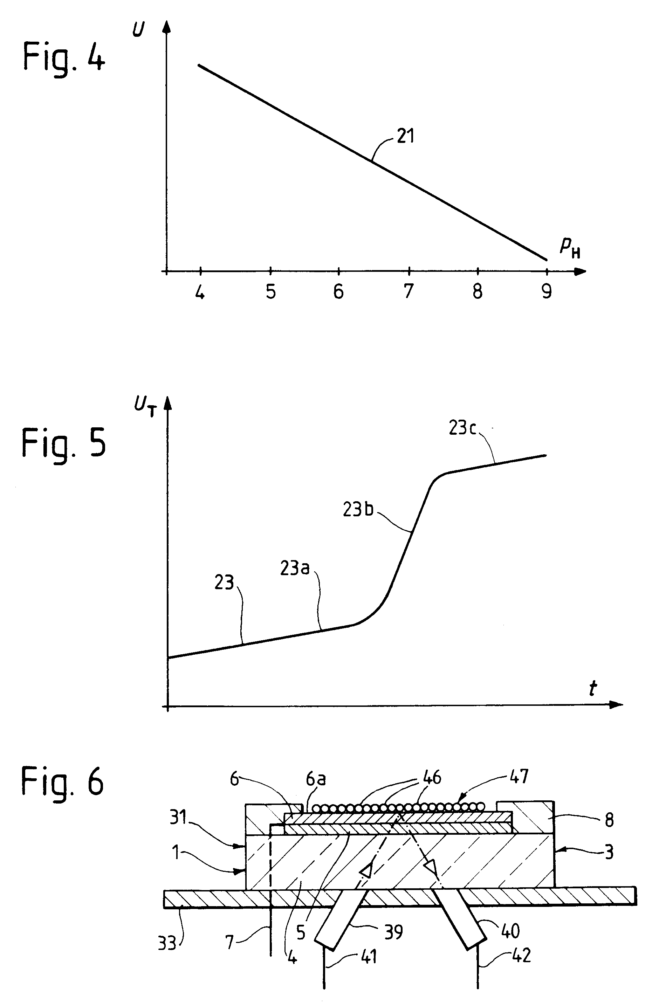

Wie es zum Beispiel aus der in der Einleitung zitierten US-A 3 726 777 bekannt ist, kann man durch Messen des elektrischen Elektrodenpotentials den p_{H}-Wert ermitteln. Es wurden potentiometrische Messungen mit den Elektroden 12 und 13 durchgeführt, die in Kontakt mit der Flüssigkeit 15 gelangende Oberflächen aus Iridiumoxid bzw. Kalomel oder Silberchlorid besitzen. Die Messergebnisse sind im Diagramm in der Fig. 4 veranschaulicht. In diesem Diagramm ist auf der Abszisse der p_{H}-Wert und auf der Ordinate das elektrische Potential U zwischen den beiden Elektroden angegeben. Der Zusammenhang zwischen dem p_{H}-Wert und dem Potential U ist mindestens in einem sich ungefähr von 4 bis 9 erstreckenden Bereich der p_{H}-Werte praktisch linear und durch die Gerade 21 gegeben, wobei der p_{H}-Wert mit abnehmendem Potential grösser wird. Das Messgerät 17 ist ausgebildet, um als Messgrösse das Potential U zu messen und dann direkt den p_{H}-Wert anzuzeigen. Die Messungen haben gezeigt, dass die Messwerte sowohl kurzfristig als auch langfristig genau reproduzierbar sind.

Die den Körper 1 aufweisende Elektrode 12 kann auch zum Steuern und/oder Verändern des p_{H}-Wertes der Flüssigkeit 15 dienen, um eine coulometrische Messung, gewissermassen eine elektroanalytische Titration durchzuführen und dabei die Pufferkapazität der Flüssigkeit zu messen. Die Elektrode 13 kann dann zum Beispiel wie bei der p_{H}-Messung einen Kalomel-oder Silberchlorid-Abschnitt oder eventuell anstelle eines solchen einen in Berührung mit der Flüssigkeit 15 stehenden Abschnitt aus Platin aufweisen.

Für die Durchführung einer coulometrischen Messung und/oder elektroanalytischen Titration kann die Oxidschicht 6 zum Beispiel vor der Messung bzw. Titration mit Hilfe eines kathodischen Stromes reduziert sowie mit Protonen gesättigt werden, wie es aus der in der Einleitung zitierten Publikation von Olthuis et al. bekannt ist. Während der Messung wird ein konstanter, elektrischer Strom durch die beiden Elektroden 12, 13 und die Flüssigkeit 15 hindurch geleitet, wobei die Elektrode 12 als Anode dient und ihr vorher mit Protonen versehenes Iridiumoxid Protonen an die Flüssigkeit 15 abgibt.

Im Diagramm in der Fig. 5 ist auf der Abszisse die Zeit t und auf der Ordinate das hier mit U_{T} bezeichnete Potential zwischen den beiden Elektroden aufgetragen. Im Diagramm ist ferner schematisch eine Kurve 23 eingezeichnet, die bei der elektroanalytischen oder - genauer gesagt - coulometrischen Messung und/oder Titration den Zusammenhang zwischen der Zeit t und dem Potential U_{T} darstellt. Wenn das Iridiumoxid bei der Messung Protonen abgibt, nimmt der p_{H}-Wert im Verlauf der Zeit t ab und das ein Mass für diesen gebende Potential U_{T} zu. Die Kurve 23 hat drei annähernd gerade, durch gebogene Übergänge stetig miteinander verbundene Kurvenabschnitte 23a, 23b, 23c. Der mittlere, steilste Kurvenabschnitt 23b entspricht dem Übergang von einem relativ basischen in einen relativ sauren Zustand. Die Pufferkapazität der Flüssigkeit 15 ist um so grösser, je kleiner die Steilheit der Kurve im betrachteten p_{H}-Bereich ist.

Die elektronischen Schaltungsmittel der Messvorrichtung 17 können zum Beispiel ausgebildet sein, um in der für die Ermittlung der Pufferkapazität vorgesehenen Betriebsart automatisch eine Messung oder Titration der in der Fig. 5 veranschaulichten Art durchzuführen und das ein Mass für den p_{H}-Wert gebende Potential U_{T} sowie den ein Mass für die Pufferkapazität gebenden Wert des Differentialquotienten dU_{T}/dt zu ermitteln. Die elektronische Messvorrichtung 17 kann ferner aus dem Differentialquotienten für einen vorgegenenen p_{H}-Bereich kontinuierlich oder quasi-kontinuierlich die Pufferkapazität berechnen und deren Wert der Anzeigevorrichtung anzeigen.

Die in der Fig. 6 ersichtliche Vorrichtung wird im folgenden als Ganzes als Messelement 31 bezeichnet und besitzt einen Körper 1, der als optischer Sensor und als Elektrode dient. Der in der Fig. 6 ersichtliche Körper 1 ist im allgemeinen ähnlich ausgebildet wie der in der Fig. 1 gezeichnete Körper 1, wobei sich entsprechende Teile der beiden Körper mit identischen Bezugszeichen bezeichnet sind. Während die Auflage 5 des in der Fig. 1 gezeichneten Körpers 1 aus Iridium gebildet ist, besteht die metallische, elektrisch leitende Auflage 5 bei dem in der Fig. 6 ersichtlichen Körper 1 jedoch zum Beispiel aus einer dünnen Schicht aus besser lichtdurchlässigem Indium oder Zinn. Die metallische Auflage 5 und die Oxidschicht 6 des zum Messelement 31 gehörenden Körpers 1 sind so dünn bemessen, dass sie gleich wie das aus einer Scheibe eines Saphirs bestehende Plättchen 4 lichtdurchlässig und mindestens annähernd klar sowie durchsichtig sind. Der Körper 1 des Messelements 31 ist an einer schematisch angedeuteten Halterung 33 befestigt und noch mit einem Lichtstrahler 39 sowie einem Lichtempfänger 40 versehen und/oder verbunden. Der Lichtstrahler 39 ist ausgebildet, um Licht durch das Plättchen 4, die Auflage 5 und die Oxidschicht 6 hindurch zu strahlen. Die Strahlungsrichtung bildet dabei vorzugsweise einen von 90° verschiedenen Winkel mit dem freien Oberflächenbereich 6a der Oxidschicht 6. Der Lichtempfänger 40 ist beispielsweise ausgebildet, um vom Lichtstrahler 39 zur Oxidschicht 6 gestrahltes und bei deren Oberfläche reflektiertes Licht zu empfangen und in eine elektrische Spannung umzuwandeln. Der Lichtstrahler und der Lichtempfänger können zum Beispiel eine Leuchtdiode bzw. eine Photodiode und eventuell noch Lichtleiter aufweisen. An die Leuchtdiode sowie Photodiode sind elektrische Leiter 41 bzw. 42 angeschlossen.

Für die Verwendung des Messelements 31 werden auf den freien Oberflächenbereich 6a der Oxidschicht 6 des zum Messelement 31 gehörenden Körpers 1 biologisch aktive Moleküle 46 aufgebracht. Die Moleküle 46 werden dabei durch Adsorptionskräfte an der Oxidschicht gebunden und/oder durch chemische Bindungen an dieser immobilisiert, so dass sie einigermassen fest an der Oxidschicht 6 haften und eine flüssigkeitsdurchlässige Molekülschicht 47 auf dieser bilden. Die Moleküle 46 bestehen aus mindestens einem Eiweiss und/oder Peptid und bilden nämlich zum Beispiel ein Enzym, etwa Glucose-Oxidase. Das Messelement 31 kann dann als Teil einer Messeinrichtung zur Durchführung von Messungen an einer Flüssigkeit dienen, die gelöste Glucose enthält. Das Messelement 31 kann zum Beispiel zusätzlich zu den zwei in der Fig. 3 ersichtlichen Elektroden 12, 13 noch im Behälter 16 oder einem diesem entsprechenden Behälter angeordnet werden. Die beiden Elektroden 12, 13 und die Leiter 7, 41, 42 des Messelements 31 können dann mit einem zur Untersuchung der Glucose ausgebildeten Messgerät verbunden sein.

Wenn nun eine zu untersuchende, zum Beispiel gelöste Glucose enthaltende Flüssigkeit in den Behälter und in Kontakt mit dem Messelement 31 gebracht wird, kann gelöste Glucose zu den Molekülen 46 gelangen und vorübergehend von diesen gebunden werden. Bei der Durchführung einer Messung kann mit dem Lichtstrahler 39 Licht durch das Plättchen 4, die Auflage 5 sowie die Oxidschicht 6 hindurch zur Molekülschicht 47 gestrahlt werden. Dieses Licht kann beim Oberflächenbereich 6a abhängig vom Brechungsindex der Oxidschicht 6, vom Brechungsindex des an diese angrenzenden Mediums, von der Strahlungsrichtung und von der Lichtwellenlänge vollständig reflektiert oder zum Teil reflektiert und zum Teil gebrochen werden. Der Brechungsindex der Molekülschicht 47 kann vom Brechungsindex der an sie angrenzende Flüssigkeit verschieden sein und zudem durch die vorübergehend an die Molekülschicht gebundene Glucose verändert werden. Durch eine geeignete Festlegung der Strahlungsrichtung sowie der Lichtwellenlänge kann daher ermöglicht werden, dass die an die Molekülschicht 47 gebundene Glucose das Verhältnis zwischen reflektiertem sowie gebrochenem Licht verändert. Dadurch kann durch eine optische oder elektro-optische Messung die Anlagerung von gelöster Glucose an der Molekülschicht 47 untersucht werden.

Die aus Glucose-Oxidase bestehenden Moleküle 46 oxidieren die zu ihnen gelangende Glucose zu Gluconsäure. Dadurch wird der p_{H}-Wert der die Glucose enthaltenden Flüssigkeit verkleinert. Das mit den beiden Elektroden 12, 13 und dem Messelement 32 verbundene Messgerät misst mit Hilfe der beiden Elektroden 12, 13 den p_{H}-Wert. Das Messgerät erzeugt ferner einen zwischen der Elektrode 13 und der vom Messelement 31 gebildeten Elektrode durch die Flüssigkeit fliessenden, elektrischen Strom und steuert dessen Richtung und Stärke derart, dass das Messelement 31 den p_{H}-Wert durch die Aufnahme und/oder eventuell Abgabe von Protonen auf einen vorgegebenen Sollwert regelt. Das Messgerät ist ferner ausgebildet, um die während der Messung insgesamt zur Konstanthaltung des p_{H}-Werts benötigte, elektrische Ladungsmenge zu messen. Diese Ladungsmenge gibt dann ein Mass für die Menge der ursprünglich in der Flüssigkeit vorhandenen und zu Gluconsäure oxidierten Glucose.

Es sei angemerkt, dass ein Messelement in der Art des Messelements 31 nicht nur für die Untersuchung von Glucose enthaltende Flüssigkeiten, sondern auch für eine Vielzahl von andern Untersuchungen verwendet werden kann, bei denen an einer Oxidschicht gehaltene, biologisch aktive Moleküle von mindestens einem Eiweiss bzw. Protein und/oder Peptid auf eine zu untersuchende, in einer Flüssigkeit gelöste und/oder dispergierte Substanz einwirken können. Beispielsweise kann man auch Antikörper- oder Antigen-Moleküle auf eine Oxidschicht aufbringen und dann immunologische Untersuchungen durchführen.

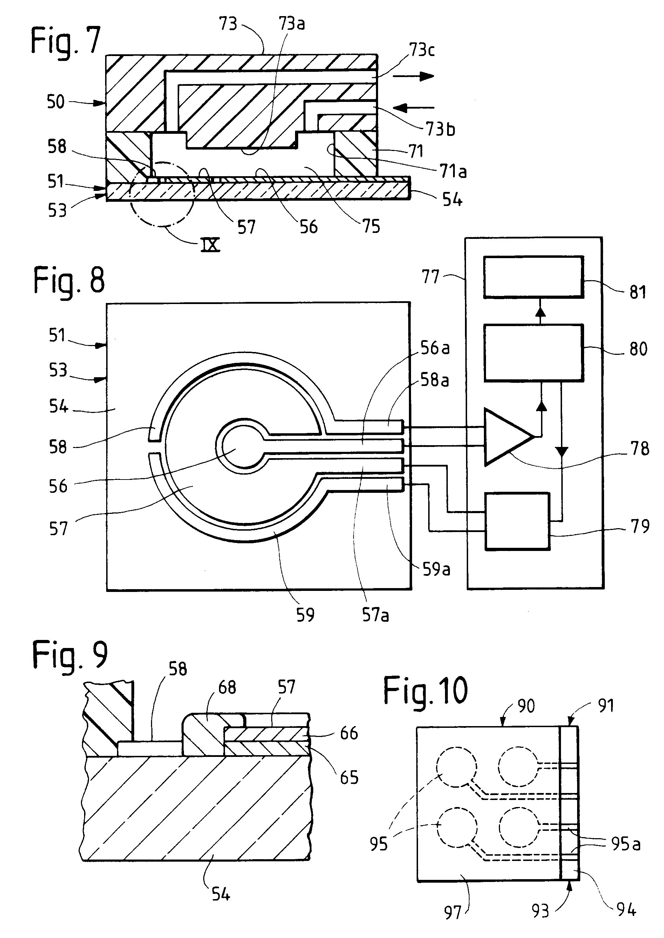

Eine Messeinrichtung für coulometrische Messungen besitzt eine in der Fig. 7 ersichtliche Vorrichtung, die einen Sensor 50 bildet. Dieser weist einen Körper 51 mit einem Träger 53 auf. Der Träger besitzt einen Trägerteil, der durch ein elektrisch isolierendes, aus einer Saphirscheibe bestehendes, viereckiges Plättchen 54 gebildet ist. Das Plättchen 54 ist auf seiner sich in der Fig. 7 oben befindenden, ebenen Fläche mit vier in der Fig. 8 ersichtlichen Elektroden, nämlich einer p_{H}-Messelektrode 56, einer Steuer- und/oder Protonenaustausch- und/oder Titrationselektrode 57, einer Referenzelektrode 58 und einer Gegenelektrode 59 versehen. Jede Elektrode ist elektrisch leitend mit einer auf dem Plättchen angeordneten Leiterbahn 56a bzw. 57a bzw. 58a bzw. 59a verbunden. Die Messelektrode 56 besitzt in der in der Fig. 8 gezeichneten Draufsicht einen kreisförmigen, aus einem vollen Kreis bestehenden Abschnitt. Die Steuer- und/oder Protonenaustausch- und/oder Titrationselektrode 57 umschliesst die Messelektrode 56 annähernd, nämlich bis auf einen den Durchtritt der Leiterbahn 56a ermöglichenden Spalt. Die Steuer- und/oder Protonenaustausch- und/oder Titrationselektrode ist also etwa C-förmig, bildet einen durch den genannten Spalt unterbrochenen Kreisring und hat eine wesentlich grössere Oberfläche als die Messelektrode 56. Jede der beiden Elektroden 58, 59 bildet einen im Vergleich zur Elektrode 57 schmalen, annähernd halbkreisförmigen Bogen und verläuft entlang von einem Abschnitt des Aussenrandes der Elektrode 57. Die vier Leiterbahnen verlaufen zu einem eine Viereckseite des Plättchens 54 bildenden Abschnitt von dessen Rand.

Die Messelektrode 56 und die zum Teil auch in der Fig. 9 ersichtliche Steuer- und/oder Protonenaustausch- und/oder Titrationselektrode 57 weisen je eine unmittelbar auf dem Plättchen 54 angeordnete, metallische, aus einer aufgedampften Schicht von reinem Iridium bestehende Auflage 65 und eine auf dieser aufliegende, einkristalline, aus Iridiumoxid bestehende Oxidschicht 66 auf. Die Leiterbahnen 56a und 57a bestehen aus Iridiumschichten, die mit der Auflage der Elektrode 56 bzw. 57 zusammenhängen. Die Referenzelektrode 58 besteht aus Silberchlorid und die mit ihr verbundene Leiterbahn 58a besteht aus Silber. Die Gegenelektrode 59 und die mit ihr verbundene Leiterbahn 59a bestehen aus Platin. Die Elektroden können - wie schon in der Einleitung beschrieben - durch Aufdampfen und zusätzlichen Massnahmen hergestellt werden. Die Leiterbahnen können ebenfalls durch Aufdampfen gebildet werden.

Zwischen den verschiedenen Elektroden und Leiterbahnen sind diese voneinander trennende Spalte vorhanden. Die Ränder der die Elektroden 56, 57 bildenden Auflagen 65 und Oxidschichten 66 sind zudem durch eine in der Fig. 9 beim Aussenrand der Elektrode 57 ersichtliche, elektrisch isolierende Abdeckung 68 flüssigkeitsdicht abgedeckt, die beispielsweise aus aufgedampftem, reinem, undotiertem Silicium oder aus Siliciumdioxid besteht.

Auf der mit den Elektroden versehenen Seite des Trägers 53 ist ein Plättchen 71 angeordnet, das ein durchgehendes, zur Gruppe der Elektroden 56, 57, 58, 59 konzentrisches Loch 71a besitzt, dessen Durchmesser ungefähr gleich dem Hüllkreis der Elektroden-Gruppe ist.

Ferner ist ein ebenfalls aus einem Plättchen bestehender Deckteil 73 vorhanden, der auf der dem Plättchen 54 abgewandten Seite des Plättchens 71 aufliegt und einen in dessen Loch 71a hineinragenden Vorsprung 73a hat. Die Plättchen 54, 71 und der Deckteil 73 begrenzen zusammen einen vom freien Teil des Lochs 71a gebildeten, dicht gegen die Umgebung abgeschlossenen Hohlraum 75 zur Aufnahme einer zu analysierenden Flüssigkeit. Der Deckteil 73 besitzt zwei Durchgänge, die zwischen dem Rand des Vorsprungs 73a sowie dem Rand des Lochs 71a in den Hohlraum 75 münden und einen Einlass 73b sowie einen Auslass 73c für die zu untersuchende Flüssigkeit bilden.

Das Plättchen 71 ist elektrisch isolierend und besteht zum Beispiel aus einem Kunststoff, könnte jedoch auch aus mineralischem Glas gebildet sein. Der Deckteil 73 besteht beispielsweise aus einem Kunststoff. Das Plättchen 54 und der Deckteil 73 sind durch Befestigungsmittel - zum Beispiel durch eine Klemmvorrichtung - lösbar zusammengehalten. Das Plättchen 71 kann unlösbar mit dem Plättchen 54 oder mit dem Deckteil 73 verbunden oder sowohl vom Plättchen 54 als auch vom Deckteil 71 lösbar zwischen diesem und dem Plättchen 54 eingespannt sein. Im übrigen kann das Plättchen 71 eventuell gemäss den Figuren 7 und 9 auf dem äusseren Randbereich der Elektroden 58, 59 aufliegen, soll diese aber nicht vollständig abdecken, so dass alle Elektroden 56, 57, 58, 59 an den Hohlraum 75 angrenzen. Der sich in der Draufsicht innerhalb des Hohlraums 75 befindende Abschnitt der aus Iridium bestehenden Leiterbahn 56a ist durch eine beispielsweise aus aufgedampftem Silicium bestehende Isolation gegen den Hohlraum 75 abgedeckt. Es wäre jedoch auch möglich, dass die Elektrode 56 zusätzlich zu dem sich im Zentrum der andern Elektroden befindenden kreisförmigen Abschnitt auch noch einen mit diesem zusammenhängenden, geraden, sich mindestens bis zum Rand des Hohlraums 75 erstreckenden, mit einer Iridiumoxidbeschichtung versehenen, nicht von einer Isolation bedeckten Abschnitt aufweist. Es sei hier angemerkt, dass die aufgedampften Elektroden in den Figuren 7 und 9 mit stark übertriebenen Dicken gezeichnet sind. Damit der Hohlraum 75 bei zusammengebautem Sensor dicht gegen die Umgebung abgeschlossen ist, kann eventuell noch eine Schicht von elektrisch isolierendem und elastisch deformierbarem Dichtungs- und Isoliermaterial auf dem die Elektroden 58, 59 umschliessenden, vom Plättchen 71 bedeckten Bereich des Plättchens 54 und zwischen den Leiterbahnen sowie auf diesen aufgebracht sein.

Die den Sensor 50 aufweisende Messeinrichtung besitzt eine elektronische Messvorrichtung 77, d.h. ein Messgerät, von dem in der Fig. 8 das Blockschema gezeichnet ist. Die Leiterbahnen 56a, 57a, 58a, 59a sind beispielsweise über eine Steckverbindung elektrisch leitend mit der elektronische Schaltungsmittel aufweisenden Messvorrichtung 77 verbunden. Diese enthält einen Messverstärker 78, dessen Eingänge mit der p_{H}-Messelektrode 56 und mit der Referenzelektrode 58 verbunden sind. Die Messvorrichtung 77 besitzt ferner eine elektrisch regelbare Stromquelle 79, deren Ausgänge mit der Steuer- und/oder Protonenaustausch- und/oder Titrationselektrode 57 und mit der Gegenelektrode 59 verbunden sind. Zur Messvorrichtung 77 gehört ferner eine Mess- und Regelschaltung 80, die beispielsweise einen digital arbeitenden Prozessor besitzt. Des weiteren ist eine Anzeige- und/oder Registriervorrichtung 81 vorhanden. Die Mess- und Regelschaltung 80 ist mit einem Ausgang des Messverstärkers 78, mit einem Regelanschluss der Stromquelle 79 und mit der Anzeige- und/oder Registriervorrichtung 81 verbunden.

Die den Sensor 50 und die elektronische Messvorrichtung 77 aufweisende Messeinrichtung kann beispielsweise verwendet werden, um eine von lebenden Zellen einer Zellkultur bei Stoffwechselvorgängen ausgeschiedene Säuremenge zu messen. Für die Durchführung einer Messung kann man eine zu untersuchende Probe einer Suspension, die aus einer Nährflüssigkeit und in dieser suspendierten Zellen besteht, durch den Einlass 73b in den Hohlraum 75 einbringen, so dass die Suspension den Hohlraum 75 beispielsweise vollständig füllt. Danach kann man im Sensor die während einer gewissen Zeitdauer von den Zellen abgegebene Säuremenge messen. Dabei misst die Mess- und Regelschaltung 80 die ein Mass für den p_{H}-Wert der Nährflüssigkeit gebende Potentialdifferenz zwischen der p_{H}-Messelektrode 56 und der Referenzelektrode 58. Ferner erzeugt die Stromquelle 79 einen zwischen der Steuer- und/oder Protonenaustausch-und/oder Titrationselektrode 57 und der Gegenelektrode 59 durch die Nährflüssigkeit fliessenden, elektrischen Gleichstrom. Dieser kann gleichförmig sein oder aus einer Folge von Impulsen bestehen und ist derart gerichtet, dass die Steuer- und/oder Protonenaustausch- und/oder Titrationselektrode 57 Protonen aus der Nährflüssigkeit aufnehmen kann. Die Mess- und Regelschaltung 80 regelt die Stromquelle 79 derart, dass die Protonenaufnahme der Elektrode 57 die Menge der Protonen der von den Zellen abgegebenen Säure kompensiert und dass der momentane p_{H}-Wert der Nährflüssigkeit gleich einem vorgegebenen, mit manuell betätigbaren Einstellelementen eingestellten, für die Entwicklung der Zellen günstigen Sollwert ist. Ferner integriert die Mess- und Regelschaltung 80 den während einer vorgegebenen, beispielsweise manuell einstellbare Messzeit zwischen der Steuer- und/oder Titrationselektrode 57 und der Gegenelektrode durch die Nährflüssigkeit fliessenden Strom und ermittelt die während der Messzeit zur Konstanthaltung des p_{H}-Wertes der Nährflüssigkeit insgesamt durch diese hindurchgeleitete elektrischen Ladungsmenge. Diese gibt dann ein Mass für die von den Zellen abgegebene Säuremenge. Die Anzeige- und/ oder Registriervorrichtung 81 kann dann beispielsweise die Ladungsmenge oder eine zu dieser proportionale Grösse und eventuell noch den p_{H}-Wert anzeigen und/oder registrieren.

Nach der Durchführung einer Messung kann man den Hohlraum 75 durch den Auslass 73c entleeren, den Hohlraum 75 ausspülen und/oder nötigenfalls den Deckteil 73 zum Reinigen der den Hohlraum 75 begrenzenden Teile vorübergehend vom Plättchen 54 trennen und danach wieder eine neue Probe in den Hohlraum 75 einbringen.

Man kann der Nährflüssigkeit, bevor sie in den Hohlraum eingebracht wird noch eine beispielsweise aus einem Arzneimittel oder einem Umweltgift bestehende Substanz beifügen, deren Wirkung auf die Zellen untersucht werden soll. Zudem kann eventuell für eine Messung noch Sauerstoff oder ein anderes Gas in der Nährflüssigkeit gelöst werden. Des weiteren kann man den Sensor 50 oder mindestens die in diesem beim Messen vorhandene Suspension auf eine für die Entwicklung der Zellen günstige Temperatur erwärmen oder kühlen. Der Sensor 50 kann also gewissermassen einen kleinen Bioreaktor bilden, in dem man Zellen kultivieren und dabei deren Stoffwechsel untersuchen kann.

Die in der Fig. 10 ersichtliche Vorrichtung 90 bildet einen Mehrfach-Sensor und besitzt einen Körper 91 mit einem Träger 93. Dieser besitzt als Hauptbestandteil ein aus einer Saphirscheibe bestehendes Plättchen 94, auf dem mehrere, nämlich zum Beispiel vier Elektroden-Gruppen 95 und Leiterbahnen-Gruppen 95a aufgebracht sind. Jede Elektroden-Gruppe 95 besitzt vier analog wie die Elektroden 56, 57, 58, 59 angeordnete Elektroden. Jede Leiterbahnen-Gruppe 95a weist vier Leiterbahnen auf, die je mit einer Elektrode verbunden sind. Gemäss der Fig. 10 können beispielsweise alle Leiterbahnen bei ein und derselben Viereckseite des viereckigen Plättchens 94 enden. Das Plättchen 94 begrenzt zusammen mit einem dem Deckteil 73 entsprechenden Deckteil 97 und einem nicht sichtbaren, dem Plättchen 71 entsprechenden Plättchen für jede Elektroden-Gruppe 95 einen Hohlraum zum Aufnehmen einer zu untersuchenden Flüssigkeit. Im übrigen kann der Deckteil 97 mit Einlässen und Auslässen versehen sein, die analog zum Einlass 73b bzw. zum Auslass 73c in einen zugeordneten Hohlraum münden. Die Vorrichtung 90 ermöglicht zusammen mit einem Messgerät gleichzeitig mehrere Proben zu untersuchen.

Der erfindungsgemässe Körper kann noch in verschiedener Hinsicht geändert werden. Zum Beispiel kann man Merkmale verschiedener beschriebener Ausführungsbeispiele miteinander kombinieren. Der weiteren könnte man eventuell das aus einem Saphir gebildete Plättchen 4 bzw. 54 bzw. 94 durch ein Plättchen aus einem metallischen oder keramischen Material oder einen nicht plättchenförmigen Teil ersetzen. Ferner kann man die Auflage 5 statt aus einem der bereits erwähnten Metalle Iridium, Indium oder Zinn aus einem anderen metallischen oder nichtmetallischen Material bilden. Die Auflage 65 kann statt aus Iridium ebenfalls aus einem anderen Metall bestehen.

Bei dem in der Fig. 7 ersichtlichen Sensor kann man den Einlass 73b sowie den Auslass 73c weglassen und eine zu analysierende Probe mit einer Pipette oder dergleichen in den durch Entfernen des Deckteils 73 vorübergehend geöffneten Hohlraum einbringen. Entsprechendes gilt auch für die einen Mehrfach-Sensor bildende, in der Fig. 10 gezeichnete Vorrichtung 90. Ferner kann man auch eine einen Mehrfach-Sensor bildende Vorrichtung vorsehen, bei der auf ein und demselben einstückigen, elektrisch isolierenden Plättchen mehr als 4, beispielsweise 6 oder 24 Elektroden-Gruppen vorhanden sind. Ferner kann man die Deckteile 73, 97 und/oder eventuell die Träger 53, 93 der in den Figuren 7 und 10 ersichtlichen Vorrichtungen bzw. Sensoren durchsichtig ausbilden, so dass die in den Vorrichtungen oder Sensoren vorhandenen Zellen auch noch mikroskopisch und/oder mit einer optischen Analysemethode untersucht werden können.

Wenn ein Körper mit einer Oxidschicht gemäss der Fig. 6 zum Halten d.h. Adsorbieren und/oder Immobilisieren von biologisch aktiven Molekülen als Elektrode dienen soll, aber keine optische Messung ermöglichen muss, kann man die Auflage 5 zum Beispiel aus Iridium sowie undurchsichtig ausbilden und selbstverständlich den Lichtstrahler 39 sowie den Lichtempfänger 40 weglassen. Wenn ein Körper mit einer zum Adsorbieren und/oder Immobilisieren von Molekülen dienenden Oxidschicht hingegen eine optische Messung ermöglichen soll, aber nicht als Elektrode dienen muss, kann man eventuell die Auflage 6 aus einem elektrisch isolierenden Material bilden oder weglassen.

## Patentansprüche

1. Körper für die Bildung mindestens einer Elektrode und/oder eines Sensors, mit einem Träger (3, 53, 93) und mindestens einer auf diesem angeordneten, einen freien Oberflächenbereich (6a) aufweisenden Oxidschicht (6, 66), die aus mindestens einem Metalloxid von mindestens einem zur fünften oder sechsten Periode und zu einer der Nebengruppen 5a, 6a, 7a, 8 des Periodensystems der chemischen Elemente gehörenden Metall und/oder Zirkon besteht, dadurch gekennzeichnet, dass mindestens der den genannten, freien Oberflächenbereich (6a) der bzw. jeder Oxidschicht (6, 66) bildende Teil von dieser einkristallin ist.

2. Körper nach Anspruch 1, dadurch gekennzeichnet, dass die mindestens eine Oxidschicht (6, 66) aus Iridiumoxid besteht.

3. Körper nach Anspruch 1, dadurch gekennzeichnet, dass die mindestens eine Oxidschicht (6, 66) aus Palladiumoxid besteht.

4. Körper nach Anspruch 1, dadurch gekennzeichnet, dass die mindestens eine Oxidschicht (6, 66) ein Oxid von mindestens einem der Elemente Niob, Ruthenium, Tantal, Wolfram, Osmium, Platin aufweist.

5. Körper nach einem der Ansprüche 1 bis 4, dadurch gekennzeichnet, dass er für die bzw. jede Oxidschicht (6, 66) eine metallische Auflage (5, 65) besitzt, auf welcher die Oxidschicht (6, 66) angeordnet ist.

6. Körper nach Anspruch 5, dadurch gekennzeichnet, dass die mindestens eine Oxidschicht (6, 66) aus Oxid eines einzigen Metalls besteht und dass die metallische Auflage (5, 65) aus diesem Metall besteht.

7. Körper nach Anspruch 5 oder 6, dadurch gekennzeichnet, dass der Träger (3, 53, 93) einen aus Aluminiumoxid, insbesondere aus einem Saphirstück bestehenden Teil aufweist, auf dem eine die genannte metallische Auflage (5) bildende Schicht aus Metall angeordnet ist.

8. Körper nach einem der Ansprüche 5 bis 7, dadurch gekennzeichnet, dass eine aus einem andern Material als die mindestens eine Oxidschicht (6, 66) bestehende elektrisch isolierende Abdeckung (8, 68) vorhanden ist, welche die Ränder der metallischen Auflage (5, 65) und der Oxidschicht (6, 66) gegen einen an den Körper angrenzenden Raum (75) abdeckt, wobei die Abdeckung (8, 68) zum Beispiel aus Silicium oder Siliciumdioxid besteht.

9. Körper nach einem der Ansprüche 1 bis 8, dadurch gekennzeichnet, dass die bzw. jede Oxidschicht (6, 66) im genannten Oberflächenbereich (6a) lichtdurchlässig und vorzugsweise durchsichtig ist.

10. Körper nach einem der Ansprüche 1 bis 9, dadurch gekennzeichnet, dass ein und derselbe Träger (53) mindestens eine Elektrode (56, 57) mit einer Oxidschicht (66) der genannten Art und mindestens noch eine Elektrode (58, 59) trägt, deren freie Oberfläche durch ein von der Oxidschicht verschiedenes Material, zum Beispiel durch Silberchlorid oder Kalomel oder Platin, gebildet ist.

11. Körper nach einem der Ansprüche 1 bis 10, dadurch gekennzeichnet, dass der Träger (53, 93) einen elektrisch isolierenden, beispielsweise aus einem einstückigen Plättchen (54, 94) bestehenden Trägerteil aufweist, der mindestens zwei als Elektroden (56, 57) dienende, voneinander in Abstand stehende Oxidschichten (66) der genannten Art aufweist.

12. Einrichtung für die coulometrische Untersuchung einer Flüssigkeit, mit einem Körper nach einem der Ansprüche 1 bis 11, dadurch gekennzeichnet, dass am Träger (53) vier in Kontakt mit der Flüssigkeit bringbare Elektroden (56, 57, 58, 59) angeordnet sind, von denen eine als p_{H}-Messelektrode (56), eine als Steuerelektrode (57) zum Steuern des p_{H}-Wertes durch Abgabe und/oder Aufnahme von Protonen, eine als Referenzelektrode (58) für die p_{H}-Messung und eine als Gegenelektrode (59) zur Steuerelektrode (57) dient, dass die Steuerelektrode (57) eine einkristalline Oxidschicht (66) aus mindestens einem Oxid von einem der genannten Metalle aufweist und dass eine elektrisch mit den vier Elektroden (56, 57, 58, 59) verbundene, elektronische Messvorrichtung (77) vorhanden und ausgebildet ist, um aufgrund einer elektrischen Potentialdifferenz zwischen der p_{H}-Messelektrode (56) sowie der Referenzelektrode (58) den p_{H}-Wert der Flüssigkeit zu ermitteln und einen zwischen der Steuerelektrode (57) sowie der Gegenelektrode (59) durch die Flüssigkeit fliessenden elektrischen Strom zu erzeugen und derart zu regeln, dass der gemessene p_{H}-Wert gleich einem Sollwert ist.

13. Einrichtung nach Anspruch 12, dadurch gekennzeichnet, dass die p_{H}-Messelektrode (56) ebenfalls eine einkristalline Oxidschicht (66) aus mindestens einem Oxid von einem der genannten Metalle aufweist, dass die Steuerelektrode (57) die p_{H}-Messelektrode (56) mindestens annähernd umschliesst und dass die Referenzelektrode (58) sowie die Gegenelektrode (59) ausserhalb der Steuerelektrode (57) angeordnet sind.

14. Einrichtung nach Anspruch 12 oder 13, dadurch gekennzeichnet, dass der Träger (53) zusammen mit mindestens einem mit ihm verbundenen Teil (71, 73) einen hohlen, gegen die Umgebung abgeschlossenen, an die vier Elektroden (56, 57, 58, 59) angrenzenden Raum (75) begrenzt.

15. Einrichtung nach einem der Ansprüche 12 bis 14, dadurch gekennzeichnet, dass die elektronische Messvorrichtung (77) ausgebildet ist, um die während einer Messzeit den genannten elektrischen Strom bildende elektrische Ladungsmenge zu ermitteln.

16. Verwendung des Körpers nach einem der Ansprüche 1 bis 11, zur elektroanalytischen Messung des p_{H}-Wertes und/oder mindestens einer Ionenkonzentration und/oder einer Pufferkapazität und/oder als Protonendonator und/oder Protonenakzeptor und/oder zum Ermitteln und/oder Erregen von Nervensignalen und/oder um am freien Oberflächenbereich (6a) der Oxidschicht (6) biologisch aktive Moleküle (46) mindestens eines Proteins und/oder Peptids zu halten und die mit den Molekülen (46) versehene Oxidschicht (6) in Kontakt mit einer Flüssigkeit zu bringen.

## Claims

1. Body for the formation of at least one electrode and/or sensor, comprising a base (3, 53, 93) on which is applied at least one oxide layer (6, 66) provided with a free surface area (6a), the said oxide layer (6, 66) consisting of at least one metal oxide of at least one metal from the fifth or sixth period and one of auxiliary groups Va, VIa, VIIa, VIII of the periodic system of the elements, and/or zirconium, **wherein** at least that part of the or each oxide layer (6, 66) which constitutes the said free surface area (6a) is monocrystalline.

2. Body as in claim 1, **wherein** the at least one oxide layer (6, 66) consists of iridium oxide.

3. Body as in claim 1, **wherein** the at least one oxide layer (6, 66) consists of palladium oxide.

4. Body as in claim 1, **wherein** the at least one oxide layer (6, 66) consists of an oxide of at least one of the elements niobium, ruthenium, tantalum, tungsten, osmium, platinum.

5. Body as in any of claims 1 to 4, **wherein** a metal layer (5, 65) is provided for the or each oxide layer (6, 66), on which the said oxide layer (6, 66) is applied.

6. Body as in claim 5, **wherein** the at least one oxide layer (6, 66) consists of the oxide of a single metal, and wherein the metal layer (5, 65) consists of this metal.

7. Body as in claim 5 or 6, **wherein** the base (3, 53, 93) is provided with a part made of aluminium oxide, in particular a piece of sapphire, on which the said metal layer (5) is applied.

8. Body as in any of claims 5 to 7, **wherein** is provided an electrically insulating coating (8, 68) consisting of some other material than the at least one oxide layer (6, 66), which coating (8, 68) covers the edges of the metal layer (5, 65) and of the oxide layer (6, 66) against a space (75) adjacent to the body, the said coating (8, 68) consisting of silicon or silicon dioxide, for instance.

9. Body as in any of claims 1 to 8, **wherein** the or each oxide layer (6, 66) is translucent, preferably transparent in the said surface area (6a).

10. Body as in any of claims 1 to 9, **wherein** one and the same base (53) carries at least one electrode (56, 57) with an oxide layer (66) of the type referred to before, and at least one other electrode (58, 59), whose free surface consists of material different from that of the oxide layer, for example, silver chloride or calomel or platinum.

11. Body as in any of claims 1 to 10, **wherein** the base (53, 93) is provided with an electrically insulating part, which is configured as a small single-piece plate (54, 94), for example, and is provided with at least two oxide layers (66) of the above type which are situated at a distance from each other and serve as electrodes (56, 57).

12. Device for coulometric analysis of a liquid, comprising a body as described in any of claims 1 to 11, **wherein** the base (53) carries four electrodes (56, 57, 58, 59) to be brought into contact with the liquid, one of which serves as a pH measuring electrode (56), one as a control electrode (57) for controlling the pH value by releasing and/or accepting protons, one as a reference electrode (58) for pH measurement, and one as a counterelectrode (59) of the said control electrode (57), and wherein the control electrode (57) is provided with a monocrystalline oxide layer (66) of at least one oxide of one of the metals referred to above, and wherein an electronic measuring unit (77) is provided, which is electrically connected to the four electrodes (56, 57, 58, 59) and is designed to determine the pH value of the liquid from a difference in electric potential between the pH measuring electrode (56) and the reference electrode (58), and to generate a flow of electric current through the liquid between the control electrode (57) and the counterelectrode (59), and regulate it in such a way as to ensure that the measured pH value equals a target value.

13. Device as in claim 12, **wherein** the pH measuring electrode (56) is also provided with a monocrystalline oxide layer (66) of at least one oxide of one of the metals referred to above, and wherein the control electrode (57) encircles the pH measuring electrode (56) almost completely, and wherein the reference electrode (58) as well as the counterelectrode (59) are located outside of the control electrode (57).

14. Device as in claim 12 or 13, **wherein** the base (53) together with at least one other part (71, 73) attached thereto, bounds a hollow space (75) adjacent to the four electrodes (56, 57, 58, 59), the said space (75) being sealed tight against its environment.

15. Device as in any of claims 12 to 14, **wherein** the electronic measuring unit (77) is designed to measure the amount of charge generating the electric current during a measurement period.

16. Use of the body described in any of claims 1 to 11, for electroanalytic measurement of the pH value and/or at least one ionic concentration and/or buffering capacity, and/or as proton donor and/or proton acceptor, and/or for the purpose of detecting and/or exciting nerve signals, and/or for keeping biologically active molecules (46) of at least one protein and/or peptide at the free surface area (6a) of the oxide layer (6), and for bringing the oxide layer (6) provided with the molecules (46) into contact with a liquid.

## Revendications

1. Corps servant à former au moins une électrode et/ou un capteur, comprenant un support (3, 53, 93) et au moins une couche d'oxyde (6, 66) prévue sur ce support et présentant une zone de surface supérieure (6a), dégagée, formée d'au moins un oxyde métallique d'au moins un métal appartenant à la cinquième ou la sixième période et à un sous-groupe Va, VIa, VIIa, VIIIa du tableau périodique des éléments et/ou du zirconium, caractérisé en ce qu'au moins la partie qui forme ladite zone de surface libre (6a) de la ou de chaque couche d'oxyde (6, 66) est un monocristal.

2. Corps selon la revendication 1, caractérisé en ce qu'au moins une couche d'oxyde (6, 66) est un oxyde d'iridium.

3. Corps selon la revendication 1, caractérisé en ce qu'au moins une couche d'oxyde (6, 66) est en oxyde de palladium.

4. Corps selon la revendication 1, caractérisé en ce qu'au moins une couche d'oxyde (6, 66) est un oxyde d'au moins l'un des éléments : niobium, ruthénium, tantale, tungstène, osmium, platine.

5. Corps selon l'une des revendications 1 à 4, caractérisé en ce que pour la couche d'oxyde ou chaque couche d'oxyde (6, 66) il comporte un revêtement métallique (5, 65) sur lequel se trouve la couche d'oxyde (6, 66).

6. Corps selon la revendication 5, caractérisé en ce qu'au moins une couche d'oxyde (6, 66) est un oxyde d'un seul métal et le revêtement métallique (5, 65) est réalisé dans ce métal.

7. Corps selon la revendication 5 ou 6, caractérisé en ce que le support (3, 53, 93) comporte une partie en oxyde d'aluminium, notamment un morceau de saphir, sur lequel se trouve la couche de métal constituant le revêtement métallique (5).

8. Corps selon l'une des revendications 5 à 7, caractérisé par un revêtement (8, 68) isolant électrique réalisé en un autre matériau qu'au moins la couche d'oxyde (6, 66), et il recouvre le revêtement métallique (5, 65) et la couche d'oxyde (6, 66) vis-à-vis d'un volume (75) adjacent au corps, le revêtement (6, 68) étant par exemple en silicium ou en dioxyde de silicium.

9. Corps selon l'une des revendications 1 à 8, caractérisé en ce que la couche d'oxyde ou chaque couche d'oxyde (6, 66) dans la zone de surface supérieure (6a) est passante à la lumière et, de préférence, transparente.

10. Corps selon l'une des revendications 1 à 9, caractérisé en ce qu'au moins un et même support (53) porte au moins une électrode (56, 57) avec une couche d'oxyde (66) du type défini et au moins encore une électrode (58, 59) dont la surface supérieure libre est formée par un matériau différent de la couche d'oxyde, par exemple par du chlorure d'argent, du calomel ou du platine.

11. Corps selon l'une des revendications 1 à 10, caractérisé en ce que le support (53, 93) comporte une partie de support par exemple une plaquette en une seule pièce (54, 94) isolante électrique, ayant au moins deux couches d'oxyde (66) du type défini, distantes l'une de l'autre et servant d'électrodes (56, 57).

12. Installation d'analyse coulométrique d'un liquide à l'aide d'un corps selon l'une des revendications 1 à 11, caractérisée en ce que le support (53) comporte quatre électrodes (56, 57, 58, 59) susceptibles d'être mises en contact avec le liquide, et dont l'une sert d'électrode (56) de mesure de pH, une comme électrode de commande (57) pour commander la valeur du pH par l'émission et/ou la réception de protons, une électrode de référence (58) pour la mesure du pH et une comme contre-électrode (59) pour l'électrode de commande (57), l'électrode de commande (57) ayant une couche d'oxyde monocristallin (66) en au moins un oxyde de l'un des métaux indiqués ainsi qu'un dispositif de mesure électronique (77) relié électriquement aux quatre électrodes (56, 57, 58, 59), pour qu'à l'aide d'une différence de potentiel électrique entre l'électrode (56) de mesure de pH et l'électrode de référence (58) on détermine la valeur du pH du liquide et un potentiel entre l'électrode de commande (57) et la contre-électrode (59) on crée un courant électrique passant dans le liquide et en réglant de manière que la valeur du pH mesuré soit égale à une valeur de consigne.

13. Installation selon la revendication 12, caractérisée en ce que l'électrode (56) de mesure de pH comporte également une couche d'oxyde monocristallin (66) en au moins un oxyde de l'un des métaux indiqués, l'électrode de commande (57) entoure au moins approximativement l'électrode (56) de mesure de pH et l'électrode de référence (58) ainsi que la contre-électrode (59) se trouve à l'extérieur de l'électrode de commande (57).

14. Installation selon la revendication 12 ou 13, caractérisée en ce que le support (53) est délimité avec au moins une pièce (71, 73) reliée à lui, un volume (75) creux, fermé par rapport à l'environnement et qui est adjacent aux quatre électrodes (56, 57, 58, 59).

15. Installation selon l'une des revendications 12 à 14, caractérisée en ce que le dispositif de mesure électronique (77) est réalisé pour que pendant un temps de mesure il détermine la quantité de charge électrique formant le courant électrique indiqué.

16. Utilisation du corps selon l'une des revendications 1 à 11 pour la mesure électroanalytique de la valeur du pH et/ou au moins une concentration ionique et/ou au moins une capacité tampon et/ou au moins un donneur de protons et/ou un accepteur de protons et/ou pour déterminer et/ou pour exciter des signaux nerveux et/ou pour maintenir sur la zone de la surface supérieure libre (6a) de la couche d'oxyde (6), des molécules actives biologiquement (46) d'au moins une protéine et/ou d'une peptide et de mettre la couche d'oxyde (6) avec les molécules (46) en contact avec un liquide.
